(19) **Europäisches Patentamt / European Patent Office / Office européen des brevets**

(11) **EP 4 172 699 B1**

(12) **FASCICULE DE BREVET EUROPEEN**

(45) Date de publication et mention de la délivrance du brevet:
**10.12.2025 Bulletin 2025/50**

(21) Numéro de dépôt: **21740161.1**

(22) Date de dépôt: **23.06.2021**

(51) Classification Internationale des Brevets (IPC):
**G03H 1/04** *(2006.01)* **G03H 1/00** *(2006.01)*
**G03H 1/08** *(2006.01)* **G01N 15/14** *(2024.01)*

(52) Classification Coopérative des Brevets (CPC):
**G03H 1/0443; G03H 1/0866;** G03H 2001/0447;
G03H 2001/0883

(86) Numéro de dépôt international:
**PCT/FR2021/051141**

(87) Numéro de publication internationale:
**WO 2021/260321 (30.12.2021 Gazette 2021/52)**

(54) **PROCÉDÉ DE MISE AU POINT POUR SYSTÈME D'IMAGERIE HOLOGRAPHIQUE**

FOKUSSIERUNGSVERFAHREN FÜR EIN HOLOGRAFISCHES BILDGEBUNGSSYSTEM

FOCUSING METHOD FOR HOLOGRAPHIC IMAGING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.06.2020 FR 2006613**

(43) Date de publication de la demande:
**03.05.2023 Bulletin 2023/18**

(73) Titulaires:
• **BIOMERIEUX**
**69280 Marcy-L'Etoile (FR)**
• **UNIVERSITE JEAN MONNET SAINT ETIENNE**
**42100 Saint-Étienne (FR)**
• **CENTRE NATIONAL DE LA RECHERCHE SCIENTIFIQUE (CNRS)**
**75016 Paris (FR)**

(72) Inventeurs:
• **FAURE, Nicolas**
**38100 GRENOBLE (FR)**
• **PINSTON, Frédéric**
**38000 GRENOBLE (FR)**
• **FOURNIER, Corinne**
**42000 SAINT ETIENNE (FR)**
• **DENIS, Loïc**
**42000 SAINT ETIENNE (FR)**
• **OLIVIER, Thomas**
**42000 SAINT ETIENNE (FR)**

(74) Mandataire: **Regimbeau**
**20, rue de Chazelles**
**75847 Paris Cedex 17 (FR)**

(56) Documents cités:
**EP-A1- 3 339 835**

## Description

### Domaine technique

La présente invention se rapporte au domaine de l'imagerie, et plus précisément traite de la localisation d'une surface d'intérêt dans un échantillon par des procédés holographiques, en vue de la mise au point pour l'acquisition d'une image de cette surface d'intérêt.

### Arrière-plan technologique

Plusieurs méthodes de mise au point pour l'imagerie ont été développées. Il s'agit de méthodes visant à mesurer précisément la position d'une surface d'intérêt, typiquement un plan, de façon à pouvoir être capable de régler/choisir le plan focal objet d'un système d'imagerie, et ainsi d'être capable d'acquérir des images de qualité de cette surface d'intérêt.

Par exemple, EP 3 339 835 propose un procédé consistant à diriger un front d'onde d'un rayonnement cohérent à travers un échantillon d'objets dans une suspension, capturer un diagramme d'interférence entre le front d'onde du rayonnement cohérent et un front d'onde du rayonnement diffracté par l'objet avec un capteur d'image, déterminer numériquement le plan focal d'au moins un objet, et reconstruire numériquement une image non focalisée de l'au moins un objet à partir du motif d'interférence dans un plan d'image qui est sensiblement parallèle au capteur d'image et dans un plan avec un décalage prédéterminé par rapport au plan focal. Le procédé comprend en outre l'identification d'au moins une partie de l'image défocalisée correspondant à au moins un objet de l'échantillon, et le calcul à partir de chacune desdites parties d'au moins une caractéristique de l'objet correspondant.

Le procédé proposé par EP 3 339 835 est simple à implémenter mais l'étape de détermination du plan focal d'au moins un objet est réalisée par un algorithme conventionnel d'autofocus présentant divers inconvénients, comme par exemple un manque de précision, dont plusieurs sont explicités ci-après. La position du plan focal objet d'un système d'imagerie holographique, qui correspond à une surface où les objets à imager doivent être positionnés pour maximiser la qualité des images générées (netteté, contraste, etc.), peut être grossièrement estimée en connaissant les caractéristiques optiques (e.g. distance focale) du système d'imagerie holographique, et son positionnement. Toutefois, plusieurs difficultés se posent. Par exemple dans le cadre de la microscopie holographique, les objets à imager dans une surface d'intérêt sont typiquement de taille de l'ordre du micromètre, de sorte qu'une erreur de positionnement de quelques micromètres du plan focal objet a de grandes conséquences sur la qualité des images obtenues. Ainsi, même dans le cas le plus simple où la surface d'intérêt à imager correspond au support physique d'un échantillon plat (cas d'une lame de microscope), la mise au point est importante et peut se révéler complexe et fastidieuse. Plus encore, dans le cas où un échantillon est un objet complexe ou tridimensionnel, la surface d'intérêt qu'il est souhaité imager peut ne pas se trouver à une position connue comme la surface d'un support de l'échantillon, mais par exemple à une certaine distance de cette surface. Un tel échantillon peut également présenter plusieurs surfaces d'intérêt à imager, à des positions différentes par rapport au système d'imagerie. En outre, tout comme la surface d'intérêt, la surface focale objet (appelée en général par abus de langage « plan focal ») peut ne pas être une surface plane en présence d'aberrations optiques.

En pratique, il est souvent nécessaire d'acquérir et d'analyser une série d'images acquises à différentes positions sur l'axe optique, c'est-à-dire à différentes coordonnées en z sur l'axe optique, décrivant les positions relatives de l'échantillon par rapport au capteur d'image. Des descripteurs sont extraits de chacune de ces images, et des facteurs de mérite en sont dérivés afin d'identifier une image de qualité dont les coordonnées en z sont estimées comme étant celles du plan focal. Ces méthodes reposent sur l'hypothèse qu'au plan focal, le contraste de l'image est maximal, et les facteurs de mérite se rapportent à la maximisation de contrastes locaux, de gradients, variance, entropie, densité spectrale de puissance, etc.

Si de telles suppositions sont pertinentes dans certains cas, notamment lorsque des objets opaques sont présents au plan focal, ces méthodes ne sont toutefois pas adaptées à toutes les situations. Par exemple, la microscopie à champ clair ("*bright-field*") d'objets n'absorbant pas la lumière montre des contrastes très faibles, même au plan focal, et la plupart des facteurs de qualité peuvent ne pas être maximisés dans une telle situation.

D'autres méthodes ne sont utilisables que dans des conditions matérielles particulières. Par exemple, certains critères de mise au point ne sont utilisables que pour des objets se présentant comme des purs déphaseurs ou purs absorbeurs d'amplitude. C'est par exemple le cas pour dans Liebling, M. & Unser, M. "Autofocus for digital Fresnel holograms by use of a Fresnelet-sparsity criterion" JOSA A 21, 2424-2430 (2004), Dubois, F., Schockaert, C., Callens, N. & Yourassowsky, C. "Focus plane detection criteria in digital holography microscopy by amplitude analysis" Opt. Express 14, 5895-5908 (2006), et Trujillo, C. A. & Garcia-Sucerquia, J. "Automatic method for focusing biological specimens in digital lensless holographic microscopy" Opt. Lett. 39, 2569-2572 (2014).

D'autres critères nécessitent l'utilisation de plusieurs longueurs d'onde pour la lumière d'illumination, ce qui peut être difficile expérimentalement, et reposent encore sur certaines suppositions concernant la dépendance de l'absorption et du déphasage de l'objet imagé en fonction de la longueur d'onde.

Il serait possible d'ajouter à l'échantillon des particules dont les caractéristiques optiques sont connues, afin de les utiliser pour la mise au point via les facteurs de mérite. Par example, les particules d'or, qui présentent un très fort contraste d'amplitude au plan focal, et un contraste de phase minimal, peuvent être utilisées à cet effet. Par exemple, Bon, P. et al. "Three-dimensional nanometre localization of nanoparticles to enhance super-resolution microscopy." Nat. Commun. 6, 7764 (2015), propose une telle méthode. Cependant, cette approche nécessite des mesures précises de phase et d'amplitude, requérant donc un équipement optique dédié.

## Présentation de l'invention

L'invention vise à permettre la mise au point, pour l'acquisition d'une image par un capteur d'image, d'une surface d'intérêt dans un échantillon, sans avoir recours à des équipements sophistiqués, même dans des conditions désavantageuses telle que l'imagerie en champ clair d'objets peu contrastés.

A cet effet, l'invention propose un procédé de mise au point pour l'acquisition d'une image d'une surface d'intérêt d'un échantillon par un capteur d'images d'un système d'imagerie tel que selon la revendication indépendante 1. D'autres aspects de l'invention sont présentés dans les revendications dépendantes.

Le procédé permet de faire une mise au point consistant à faire coïncider la position de la surface d'intérêt avec le plan d'acquisition du capteur d'image, grâce à l'analyse d'une image bidimensionnelle simple. Contrairement à des méthodes précédemment employées, le procédé selon l'invention ne requiert pas de reconstruction de phase sur le plan d'acquisition, ne requiert pas une illumination selon plusieurs longueurs d'onde, ni ne requiert une analyse par balayage mécanique de plusieurs positions en z sur l'axe optique de l'échantillon.

L'invention concerne également un système d'imagerie holographique tel que selon la revendication indépendante 15.

## Présentation des figures

D'autres caractéristiques, buts et avantages de l'invention ressortiront de la description qui suit, qui est purement illustrative et non limitative, et qui doit être lue en regard des dessins annexés sur lesquels :

- la figure 1 est une vue schématique simplifiée d'un système d'imagerie holographique selon un mode de réalisation possible de l'invention ;
- la figure 2 est une vue en coupe schématique d'un échantillon présentant une surface d'intérêt et des objets de référence, selon un mode de réalisation possible de l'invention ;
- la figure 3 est un exemple d'une image holographique d'un échantillon comprenant plusieurs billes de polystyrène en tant qu'objets de référence ;

- la figure 4 est un modèle tridimensionnel montrant les positions d'objets de référence de l'image de la figure 3, déterminés par le procédé selon un mode de réalisation possible de l'invention ;
- la figure 5 montre le résultat d'une mise au point numérique de l'image de la figure 3 à partir des positions d'objets de référence, déterminés par le procédé selon un mode de réalisation possible de l'invention.

## Description détaillée

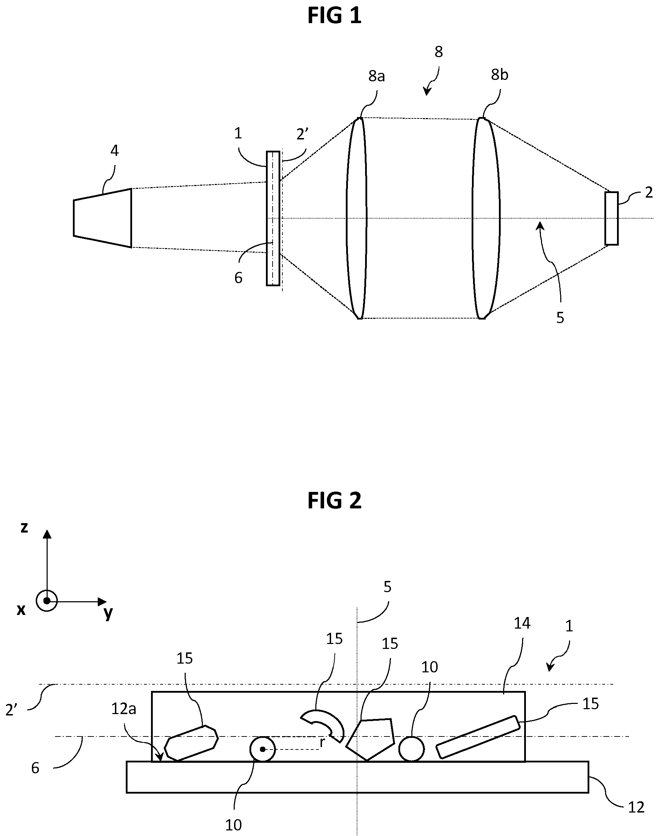

La **figure 1** représente schématiquement un système d'imagerie, qui est ici un système d'imagerie holographique en ligne pour imager un échantillon 1 au moyen d'un capteur d'images 2 numérique, placé dans un plan image du système d'imagerie holographique. Le système d'imagerie est qualifié de système d'imagerie holographique en ce qu'il est capable d'acquérir des images holographiques, mais ce même système d'imagerie pourrait également acquérir des images non holographiques. Un axe optique 5 relit l'échantillon 1 et le capteur d'images 2. Cet axe optique 5 est montré ici rectiligne, mais pourrait être plus complexe, en fonction des configurations. Une source lumineuse 4 est configurée pour illuminer l'échantillon 1 dans le champ de vue (ou « field-of-view ») du système d'imagerie holographique au moyen d'un faisceau d'illumination de lumière d'illumination suffisamment cohérente pour l'acquisition d'un hologramme, c'est-à-dire cohérente ou partiellement cohérente. La lumière d'illumination présente les caractéristiques conventionnelles pour l'imagerie holographique, sans contraintes additionnelle particulière. La lumière d'illumination peut ainsi être monochromatique (par exemple avec une longueur d'onde autour de 500 nm) ou possiblement être composée de plusieurs longueurs d'onde, par exemple utilisées l'une après l'autre. Le système d'imagerie peut comprendre un ensemble d'organes optiques 8 sur le chemin lumineux entre l'échantillon 1 et le capteur d'images 2. Dans l'exemple illustré, le système d'imagerie holographique est muni d'un objectif de microscope 8a et d'une lentille de tube 8b, disposés entre l'échantillon 1 et le capteur d'images numérique 2. Un organe optique tel que l'objectif de microscope 8a est cependant optionnel, l'invention n'étant pas limitée à la microscopie holographique avec lentille ou à un ensemble d'organes optiques particulier. L'arrangement décrit ici est bien entendu un exemple non limitatif. Tout système d'imagerie holographique peut être utilisé, en ligne ou non, avec ou sans objectif de microscope, etc. En effet, le procédé repose sur l'exploitation d'une image holographique acquise par un système d''imagerie. Ainsi, dès lors qu'un système d'imagerie peut acquérir une image holographique dans laquelle apparaissent les motifs d'interférence causés par les objets de référence, ce système d'imagerie convient à la mise en œuvre du procédé. Le système d'imagerie comprend également un système automatisé de traitement de données, non représenté, comprenant au moins un processeur, une mémoire, et qui est configuré pour recevoir au moins une image holographique du capteur d'images 2 et pour traiter cette image holographique afin de déterminer une position de la surface d'intérêt 6 par rapport au système d'imagerie holographique (et en particulier par rapport à son plan d'acquisition 2').

L'échantillon 1 comprend la surface d'intérêt 6 qu'il est souhaité imager. La surface d'intérêt 6 peut être plane dans le plus simple des cas, ou être courbe. La surface d'intérêt 6 peut s'étendre dans un plan perpendiculaire à l'axe optique 5, ou bien présenter une inclinaison (souvent désignée sous le terme anglais de "tilt") par rapport à un plan perpendiculaire à l'axe optique 5. On désigne par position de la surface d'intérêt 6 la disposition spatiale de la surface d'intérêt 6, incluant sa localisation et son éventuelle inclinaison, dans le système d'imagerie. La surface d'intérêt 6 peut être une partie de l'échantillon 1, en particulier lorsque l'échantillon 1 est un objet tridimensionnel présentant un certain volume contenant plusieurs surfaces ou couches à plusieurs positions sur l'axe optique 5. Plus généralement, la surface d'intérêt 6 correspond à l'emplacement de la partie de l'échantillon 1 qu'on cherche à imager. Généralement, l'échantillon 1 repose sur un support 12, comme par exemple une lame de microscope, et la surface d'intérêt 6 peut avantageusement correspondre à l'interface 12a entre le support 12 et l'échantillon 1, ou bien encore à une surface parallèle à cette interface 12a comme dans l'exemple illustré, ou au moins dont la position peut être déduite de la position de l'interface 12a entre le support 12 et l'échantillon 1. Il est à noter que le choix de la surface d'intérêt 6 peut bénéficier d'une forme de connaissance a priori sur l'échantillon 1 et ce qu'on veut y observer, comme par exemple la taille de micro-organismes 15 présents dans l'échantillon 1 et susceptibles de reposer sur le support 12.

L'échantillon 1 comprend au moins un objet de référence 10 qui se trouve à une position correspondant à la position de la surface d'intérêt 6. Un objet de référence 10 présente une forme connue. Cette forme est connue car elle peut être décrite par des paramètres géométriques. Alternativement, la forme peut être connue uniquement en termes de taille de l'objet de référence 10, au moins par rapport à la longueur d'onde de la lumière d'illumination, par exemple lorsque l'objet de référence 10 est dans un cas limite de la diffusion Rayleigh, c'est-à-dire avec une dimension 5 à 10 fois plus petite que cette longueur d'onde. Il n'y a dans ce cas pas de paramètres géométriques. De préférence, l'échantillon 1 comprend plusieurs objets de référence 10, au moins 3 objets de référence 10, et de préférence encore au moins 5 objets de référence 10. S'il est possible que l'échantillon 1 contienne une multitude d'objets de référence 10, il n'est généralement pas nécessaire que plus d'une ou deux douzaines d'objets de référence 10 apparaissent dans une image acquise.

Les paramètres caractérisants associés aux objets de référence 10 comprennent au moins des paramètres de position localisant individuellement chacun des objets de référence 10, typiquement des coordonnées de position. On entend par position d'un objet de référence 10 la disposition spatiale dudit objet de référence 10, incluant sa localisation et son éventuelle inclinaison, dans le système d'imagerie. De préférence, les paramètres caractérisants associés aux objets de référence 10 comprennent également des paramètres géométriques décrivant la forme connue des objets de référence 10. Les paramètres géométriques correspondent à une connaissance a priori de la forme géométrique des objets de référence 10. A cet égard, les objets de référence 10 présentent une forme géométrique simple, et de préférence, un objet de référence 10 a une forme sphérique, cylindrique ou ellipsoïdique. Dans le cas d'un objet de référence 10 ayant une forme sphérique, les paramètres géométriques pourront simplement être constitués par le rayon d'une sphère modélisant l'objet de référence 10, les coordonnées de position correspondant alors à la position du centre de cette sphère. Plus généralement, les paramètres géométriques sont ceux pris en compte par le modèle de diffraction de la lumière qui sera utilisé (par exemple le modèle de Mie, le modèle de Mie généralisé, le modèle de Thompson ou le modèle de Rayleigh). Ainsi, pour un objet de référence 10 globalement sphérique, le modèle de diffraction de la lumière de Mie (ou solution de Lorenz-Mie) ne requiert que le rayon de la sphère en tant que paramètre géométrique. Dans le cas d'un objet de référence 10 avec une forme globalement cylindrique, un rayon et une longueur constituent les seuls paramètres géométriques nécessaires pour décrire la forme. Par conséquent, tous les paramètres géométriques des objets de référence 10 n'ont pas à être connus, mais uniquement ceux correspondant à une approximation de la forme des objets de référence 10 et qui sont utilisés par le modèle de diffraction de la lumière.

La taille de l'objet de référence 10 n'est pas importante, et peut par exemple présenter un diamètre (plus grande dimension) allant de 10 nm à 100 μm. Le choix de la taille de l'objet de référence 10 est plutôt conditionné par des aspects secondaires. D'une part, la taille de l'objet de référence 10 doit permettre de générer un contraste suffisant, en prenant en compte la longueur d'onde de la lumière d'illumination, la différence d'indice avec le milieu autour de l'objet de référence 10, voire le contraste généré par d'autres objets dans l'image holographique. Le diamètre de l'objet de référence 10 est ainsi de préférence supérieure à 10 nm, et de préférence encore supérieur à 100 nm. D'autre part, la surface projetée des objets de référence 10 sur le capteur d'images 2 ne doit pas être trop importante de manière à ne pas altérer la qualité de l'image holographique. Typiquement, une surface projetée inférieure à 10 % (et de préférence encore inférieure à 1%) permettra une bonne qualité d'image holographique, si par ailleurs le reste de l'échantillon 1 n'est pas trop dense. En outre, les objets de référence 10 ne doivent pas masquer le reste de l'échantillon 1, et notamment la surface d'intérêt 6. La taille des objets de référence 10 est donc choisie afin de ne pas occuper trop d'espace dans le champ de vue du capteur d'images 2. A cet égard, les objets de référence 10 sont de préférence distants les uns des autres, et non pas adjacents, et sont de préférence répartis sur tout le champ de vue du capteur d'images 2, de manière éparse.

Un objet de référence 10 présente, comme tout matériau, un indice de réfraction. Dans la mesure où l'objet de référence 10 est distinct du reste de l'échantillon 1, son indice de réfraction diffère du milieu qui l'entoure, même très faiblement. Ainsi, un indice de réfraction d'un objet de référence 10 qui diffère de 0,01 de l'indice de réfaction du milieu environnant l'objet de référence 10 permet d'identifier son impact sur la diffraction lumineuse dans une image acquise, et permet donc de mettre en œuvre la méthode. De préférence toutefois, l'indice de réfraction de l'objet de référence 10 diffère d'au moins 0,05 par rapport à l'indice de réfaction de la partie de l'échantillon 1 immédiatement adjacente à l'objet de référence 10, et de préférence encore d'au moins 0,1. L'indice de réfraction de l'objet de référence 10 est de préférence connu et renseigné dans le modèle de diffraction de la lumière. En particulier, dans le cas où l'objet de référence 10 est opaque, c'est-à-dire que la composante complexe de son indice de réfraction peut être considérée comme tendant vers l'infini à la longueur d'onde considérée, le modèle de diffraction de la lumière peut être modifié en conséquence afin de limiter le nombre de paramètres à ajuster pour diminuer le temps de calcul, et éviter un éventuel sur-ajustement. Dans le cas d'un objet de référence 10 transparent ou partiellement transparent, l'indice de réfraction de l'objet de référence 10 peut également être inconnu, ou connu de façon imprécise, et peut être estimé de la même manière que les paramètres géométriques ou de position associés à l'objet de référence 10, via l'utilisation du modèle de diffraction, et faire ainsi parti des paramètres caractérisants associés à l'objet de référence 10.

L'échantillon 1 peut comprendre un milieu d'immersion 14, et le modèle de diffraction de la lumière peut impliquer un indice de réfraction dudit milieu d'immersion 14, qui est estimé par ajustement dans le modèle de diffraction de la lumière pour approximer les motifs d'interférence causés par l'objet de référence dans l'image holographique, de la même manière que les paramètres caractérisants associés à l'objet, via l'utilisation du modèle de diffraction.

En dehors du fait que l'objet de référence 10 doit présenter une forme connue décrite par des paramètres caractérisants qui lui sont associés, ou alors une très petite taille par rapport à longueur d'onde de la lumière d'illumination, peu de contraintes pèsent sur le choix d'un objet de référence 10. Un objet de référence 10 peut être opaque ou transparent, et peut être constitué de matières variées, comme par exemple la silice, le polystyrène, ou un métal tel que l'or. Au regard des considérations ci-dessus, un objet de référence 10 peut être un objet artificiel ajouté à l'échantillon 1. L'avantage d'ajouter un objet de référence artificiel réside principalement dans la connaissance fine de ses paramètres géométriques et de son indice de réfraction, ainsi que dans la régularité de sa forme. En cas d'objets de référence 10 artificiels ajoutés à l'échantillon 1, ceux-ci sont choisis pour présenter une forme simple et régulière, de préférence cylindrique ou ellipsoïdique, et de préférence encore une forme sphérique, afin de permettre la meilleure adéquation entre la forme réelle de l'objet de référence 10 et son approximation décrite par les paramètres caractérisants pris en compte par le modèle de diffraction. Par exemple, dans le cas illustré dans la **Figure 2**, les objets de référence 10 sont des billes de polystyrène, opaques, d'un diamètre de 1 $\mu$m.

L'objet de référence 10 peut également être présent sur le support 12 de l'échantillon 1, faisant partie du support 12 au niveau de son interface avec l'échantillon 1. Il est par exemple possible de graver, par exemple par photolithographie, la surface 12a du support 12 pour y faire apparaître des formes, de préférence arrondies, pouvant répondre aux exigences d'un objet de référence (nervures arrondies par exemple).

Un objet de référence 10 peut aussi être un micro-organisme présent dans l'échantillon 1. Par exemple, la bactérie *Staphylococcus epidermidis* présente une forme quasi-sphérique, avec une taille connue dans une certaine plage (pouvant donc être estimée par ajustement), ainsi qu'un indice de réfraction connu également dans une certaine plage (pouvant donc être estimé par ajustement). Il s'agit en outre d'une bactérie commensale de l'humain, typique de la flore de la peau, et susceptible donc d'être couramment présente dans un échantillon à imager (naturellement ou par contamination). D'autres types de micro-organisme peuvent être utilisés, dès lors qu'ils présentent une forme pouvant être décrite par des paramètres géométriques susceptibles d'être pris en compte par le modèle de diffraction de la lumière, et que leur taille et indice de réfaction peuvent être estimés. On peut ainsi avantageusement exploiter des constituants naturels de l'échantillon 1. Il est à noter qu'il est possible d'utiliser à la fois des objets artificiels inertes ajoutés à l'échantillon 1 et des micro-organismes présents dans l'échantillon 1.

Ainsi qu'évoqué précédemment, l'objet de référence 10 se trouve à une position en correspondance avec la position de la surface d'intérêt 6, c'est-à-dire qu'il existe une relation de correspondance entre la position de la surface d'intérêt 6 et la position de chaque objet de référence 10. Si certaines configurations ne posent aucun problème, comme par exemple dans le cas où l'objet de référence 10 est naturellement présent dans l'échantillon 1 au niveau de la surface d'intérêt 6 (par exemple dans le cas de micro-organismes), ou bien lorsque la surface d'intérêt 6 coïncide avec une surface du support 12 sur laquelle sont formés des objets de référence 10, d'autres configurations peuvent parfois nécessiter de prendre des précautions afin de s'assurer de la correspondance entre la position d'un objet de référence 10 et la surface d'intérêt 6. Lorsque la surface d'intérêt 6 coïncide avec la surface 12a du support 12, ou est liée à cette surface 12a du support 12 par exemple par une relation de parallélisme, il est possible de déposer les objets de référence 10 directement sur la surface 12a du support 12 avant la mise en place du reste de l'échantillon 1 sur le support 12. Ainsi, un milieu d'immersion 14 fluide (par exemple de l'eau) contenant les objets de référence 10 en suspension peut être préalablement déposé sur la surface 12a du support 12 avant la mise en place du reste de l'échantillon 1.

Une fois l'échantillon 1 mis en place, l'échantillon 1 est illuminé par la lumière d'illumination, et le capteur d'images 2 acquiert au moins une image holographique bidimensionnelle. Il peut s'agir d'une image acquise de façon isolée, ou d'une série d'images, et en particulier d'une série d'images holographiques acquises pour différentes positions du plan d'acquisition 2' relativement à l'échantillon 1 le long de l'axe optique 5 et/ou avec des longueurs d'onde différentes pour la lumière d'illumination.

Ces différentes positions du plan d'acquisition 2' relativement à l'échantillon 1 peuvent être obtenues par différentes positions de l'échantillon 1 le long de l'axe optique 5 relativement au capteur d'images 2, par exemple en déplaçant l'échantillon 1 et son support 12 sur l'axe optique entre chaque acquisition d'image par une platine motorisée. Il est également possible de déplacer le capteur d'images 2, par exemple via un rail motorisé ou une platine motorisée. Il est également possible d'obtenir ces différentes positions du plan d'acquisition 2' par la modification d'un organe optique du système d'imagerie holographique déplaçant le plan d'acquisition 2', en modifiant une focalisation de rayons lumineux incident au capteur d'images 2 de manière à déplacer le plan d'acquisition 2' du capteur d'images 2.

De même que tout type de système d'imagerie holographique peut être utilisé comme évoqué plus haut, diverses techniques d'acquisition d'images holographiques peuvent être utilisées, dès lors que l'image acquise fait apparaître les effets optiques de la présence des objets de référence 10 dans le champ de vue du capteur d'images numérique 2, et en particulier les figures d'interférence générées par les interférences entre la lumière d'illumination et la lumière diffusée par les objets de référence 10, apparaissant dans l'image holographiques comme des motifs d'interférence causés par l'objet de référence. Il va sans dire toutefois que l'image est acquise avec le système d'imagerie holographique dans une configuration adaptée pour imager les objets de référence 10 (ou plutôt les motifs d'interférence causés par ceux-ci), et donc avec les réglages adéquats (illumination, etc.) courants pour l'homme du métier.

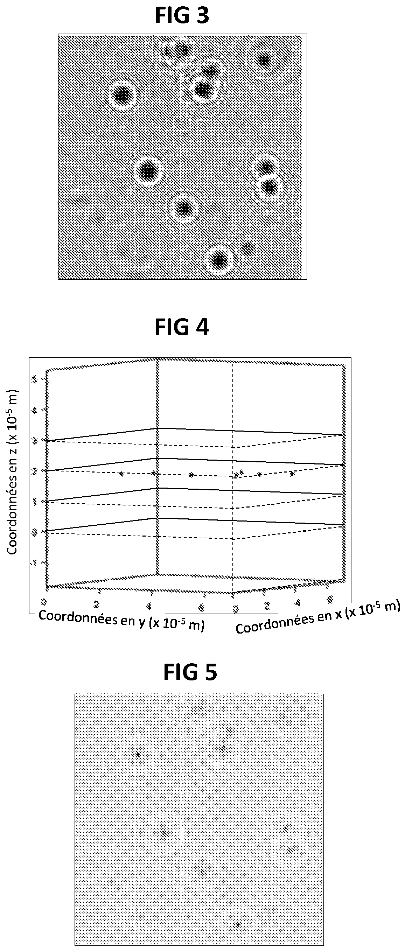

La **figure 3** montre un exemple d'une image holographique d'intensité, bidimensionnelle, acquise par un capteur d'images 2 d'un système d'imagerie holographique. Les objets de référence 10 sont ici des billes de polystyrène opaques d'un diamètre d'environ 1 $\mu$m placées à la surface d'un support 12. Cet échantillon est imagé par une lumière d'illumination à une longueur d'onde d'environ 510 nm.

Une fois l'image holographique acquise, la position de l'objet de référence 10 ou de plusieurs objets de référence 10 par rapport au plan d'acquisition 2' est déterminée. Pour ce faire, il est utilisé un modèle de diffraction de la lumière par l'objet de référence 10. Le modèle de diffraction est utilisé pour détecter un objet de référence 10 dans l'image holographique acquise et déterminer sa position par rapport au plan d'acquisition 2'. Le modèle de diffraction permet, à partir de caractéristiques de l'objet de référence 10, de prédire les interférences générées par la présence de l'objet de référence 10 dans le champ de vue, et donc l'apparence de l'objet de référence 10 dans l'image holographique acquise, en fonction de sa position par rapport au plan d'acquisition 2'. Plus précisément, le modèle de diffraction de la lumière prend en compte des paramètres géométriques de l'objet de référence 10 et des coordonnées de position de l'objet de référence 10, ainsi qu'éventuellement l'indice de réfraction de l'objet de référence 10. D'autres paramètres peuvent être pris en compte, et notamment l'indice du milieu d'immersion 14, ou des caractéristiques du système d'imagerie holographiques telles que la longueur d'onde de la lumière d'illumination, le grossissement, l'ouverture numérique, etc. Toutefois, ces autres paramètres sont des éléments de conception de l'instrument, connus et fixés par l'utilisateur. Ils ne correspondent donc qu'à des réglages, qui d'ailleurs ne varient pas pour différents objets de référence 10 d'une même image. Ainsi, les paramètres importants sont les paramètres géométriques de l'objet de référence 10 et des coordonnées de position de l'objet de référence 10, et dans une moindre mesure ses caractéristiques optiques (notamment son indice de réfraction).

Les paramètres caractérisants associés à l'objet de référence sont les variables ajustées pour faire correspondre au mieux les figures d'interférence décrites par le modèle avec les motifs d'interférence apparaissant dans l'image holographique acquise. Les paramètres associés à l'objet de référence 10, ou du moins les coordonnées de position de l'objet de référence, sont estimés par ajustement dans le modèle de diffraction de la lumière pour approximer les motifs d'interférence causés par l'objet de référence dans l'image holographique acquise. L'adéquation entre des figures d'interférence décrites par le modèle de diffraction et les motifs d'interférence apparaissant dans l'image holographique acquise permet de déterminer que les paramètres caractérisants (paramètres de position, paramètres géométriques, et paramètres optiques) utilisés dans le modèle de diffraction sont ceux de l'objet de référence 10. Cette estimation peut être réalisée par la minimisation d'un critère. Il peut s'agir d'une approche de problème inverse basée sur le maximum de vraisemblance, et/ou incluant un a priori (par exemple un rappel quadratique aux valeurs attendues des paramètres géométriques et optiques) et/ou des contraintes (par exemple sur la gamme de valeurs acceptées des paramètres géométriques ou optiques).A titre d'exemple, sous une hypothèse de bruit aléatoire gaussien sur l'intensité captée par chacun des pixels du capteur d'images 2 numérique, il peut s'agir d'une méthode des moindres carrés, éventuellement pondérée, entre des données **D** (c'est-à-dire l'image acquise) et un modèle **M** de diffraction de lumière par l'interaction de l'onde incidente et de l'objet de référence, dépendant d'un vecteur de paramètres spatiaux V décrivant cet objet de référence, et prédisant le champ électromagnétique et *in fine* l'intensité dans le plan image où se trouve le capteur d'images 2. Avec pour objet de référence 10 une sphère de rayon r dont le centre est localisé aux coordonnées (x, y, z), le vecteur de paramètres à estimer prend la forme **V**=(x, y, z, r)$^t$, et l'estimation **E** des paramètres est déterminée par minimisation de la norme L2 de la différence entre les données **D** et le modèle **M** appliqué au vecteur de paramètres à estimer **V** :

$$E = \arg\min_{V} \|M(V) - D\|_W^2$$

où W est une matrice de pondération optionnelle qui peut prendre en compte les pixels morts ou manquants, ou permettre de considérer la matrice de covariance du bruit. Dans cet exemple, l'objet de référence 10 est supposé sphérique et le modèle peut typiquement être le modèle de Mie. D'autres formes d'un objet de référence 10 peuvent être envisagées, avec d'autres paramètres géométriques décrivant ces formes. Le modèle de diffraction de la lumière est en particulier choisi en fonction de la forme connue de l'objet de référence 10, et le modèle peut être par exemple le modèle de Mie, le modèle de Mie généralisé, le modèle de Thompson, ou le modèle de Rayleigh, ou le modèle de propagation de Rayleigh-Sommerfeld. Le modèle de Mie est en particulier adapté pour les objets de référence 10 sphériques d'une taille comparable à la longueur d'onde de la lumière d'illumination, le modèle de Mie généralisé s'appliquant préférentiellement aux objets de formes cylindriques ou ellipsoïdiques ; le modèle de Thompson s'appliquant à des objets sphériques opaques, et le modèle de Rayleigh s'appliquant préférentiellement à des objets de référence 10 d'une taille inférieure à 5 à 10 fois la longueur d'onde de la lumière d'illumination, et de forme quelconque.

Par ailleurs, lorsque l'indice de réfraction fait partie des paramètres caractérisants à estimer par ajustement dans le modèle de diffraction, il peut être ajouté au vecteur des paramètres à estimer, de la même façon que les paramètres géométriques et de position. Dans l'exemple ci-dessus, le vecteur de paramètres à estimer prendrait la forme **V**=(x, y, z, r, n)$^t$ avec n l'indice de réfraction de l'objet de référence 10. Il est possible d'estimer de même d'autres paramètres intervenant dans la diffraction ou la propagation de la lumière sur lesquels pèserait une incertitude. De préférence toutefois, le nombre de paramètres à estimer est réduit autant que possible afin de ne pas altérer la précision du procédé.

De préférence, plusieurs objets de référence 10 sont présents dans le champ de vue du capteur d'images 2 et apparaissent dans l'image holographique acquise. La détermination de la position de chaque objet de référence 10, via la détermination de leurs paramètres de position respectives par rapport au plan d'acquisition 2', est de préférence réalisée de manière itérative, objet de référence 10 après objet de référence 10, de préférence en soustrayant à chaque fois des données de l'image holographique acquise l'apparence d'un l'objet de référence 10 dont les paramètres caractérisants associés audit objet de référence 10 ont été précédemment déterminés. Il est notamment possible d'appliquer un algorithme de type glouton.

Dès lors que plus de trois objets de référence non alignés apparaissent sur l'image holographique acquise, il est possible de déterminer non seulement la position relative des objets de référence sur l'axe optique 5 (coordonnées en z) par rapport au plan d'acquisition 2', mais également l'orientation de la surface dite de référence dans laquelle ces objets de référence 10 s'organisent. Ainsi, la détermination de la position de la surface d'intérêt 6 peut comprendre, suite à la détermination des positions des objets de référence 10, la détermination d'une surface de référence dans laquelle s'organisent ces objets de référence 10, par exemple par une interpolation des coordonnées de position des objets de référence 10 par rapport au plan d'acquisition 2' pour déterminer des coordonnées paramétriques de cette surface de référence dans laquelle s'organisent les objets de référence 10. La position de la surface d'intérêt 6 peut ensuite être déterminée par rapport à cette surface de référence grâce à la correspondance liant la surface de référence et la surface d'intérêt 6.

La **figure 4** est une représentation tridimensionnelle montrant les positions de sept objets de référence 10 de l'image de la figure 3, par rapport au plan d'acquisition 2', ces positions étant déterminées par ajustement d'un modèle de Mie de diffraction de la lumière, impliquant les paramètres de position, géométriques et optiques des billes, en l'occurrence les coordonnées de position (x, y, z), le rayon des billes, et leur indice de réfraction. Chaque point représente un centre d'une bille. Les coordonnées sont données en dizaines de micromètres, aussi bien pour l'axe optique 5 en z que pour les coordonnées en x et y perpendiculaires à l'axe optique 5 en z. Il apparaît de la figure 4 que les objets de référence 10 s'organisent bien sur un plan de référence, en l'occurrence celui du de la surface 12a support 12 sur lequel elles reposent.

Dans l'exemple de la figure 4, la surface de référence 6' dont la position a pu être déterminée est la surface 12a du support 12 sur lequel les billes sont déposées. Il s'agit d'un cas particulier particulièrement avantageux, mais une autre surface de référence aurait pu être choisie, comme par exemple le centre des billes, qui sont décalés en z du support 12 par une distance correspondant aux rayons r des billes. Toutefois, une telle surface passant par le centre des billes peut être irrégulière et non plane, si les billes n'ont pas toutes exactement le même rayon. Il est donc préférable de choisir en tant que surface de référence 6' la surface 12a du support 12 qui est en principe plane et ne dépend pas de la régularité des rayons des billes.

Une fois que la position d'un objet de référence 10 a été déterminée par rapport au plan d'acquisition 2', via ses paramètres de position (typiquement ses coordonnées de position), il est possible à partir des paramètres de position de l'objet de référence 10 de déterminer la position de la surface d'intérêt 6 par rapport au plan d'acquisition 2', puisque l'objet de référence 10 se trouve à une position correspondant à la position de la surface d'intérêt 6. Dans le cas où des coordonnées paramétriques d'une surface de référence 6' dans laquelle s'organisent les objets de référence 10 ont été déterminées, la position de la surface d'intérêt 6 peut être déterminée à partir des coordonnées paramétriques de cette surface de référence 6'.

La position de la surface d'intérêt 6 peut coïncider avec la position de l'objet de référence 10, ce qui est la plus simple des correspondances. Ainsi, dans l'exemple de la figure 4, si la surface d'intérêt 6 coïncidait avec l'interface entre l'échantillon 1 et le support 12, la position de l'objet de référence 10 ou de la surface de référence 6' qui en est déduite, donnerait directement la position de la surface d'intérêt 6 par rapport au plan d'acquisition 2'. La position de la surface d'intérêt 6 peut ne pas coïncider avec la position de l'objet de référence 10, mais il y a toujours une correspondance entre la position de la surface d'intérêt 6 et la position de l'objet de référence 10. Dans ce cas, la position de la surface d'intérêt 6 peut se définir par rapport à la position de l'objet de référence 10. Cette correspondance peut par exemple être un décalage dans une direction, en particulier le long de l'axe optique 5.

Dans l'exemple de la figure 4, la position de la surface d'intérêt 6 est correspond au milieu des objets de référence 10 reposant sur la surface 12a du support 12. Dans l'exemple de la figure 4, la surface d'intérêt 6 dont la position peut être déterminée à partir des positions des objets de référence 10 n'est ainsi pas la surface 12a du support 12 formant l'interface entre l'échantillon 1 et le support 12, mais peut se définir par rapport au centre des billes, par une simple translation le long de l'axe optique 5. Il suffit de prendre en compte les positions des billes sur la surface 12a du support 12 en tant que surface de référence 6', et de décaler les coordonnées en z d'une valeur correspondant à une fois le rayon r des billes, qui peut avoir été déterminée en tant que paramètre géométrique formant les paramètres caractérisant associés à chaque objet de référence 10. Il est aisé de choisir une autre surface d'intérêt 6. Par exemple, s'il est souhaité connaître la position du haut des billes formant une autre surface d'intérêt 6, il suffit d'une translation de deux fois le rayon des billes à partir de la surface 12a du support 12 prise comme surface de référence 6'.

Par exemple, si l'échantillon 1 contient des microorganismes faisant 2 $\mu$m d'épaisseur reposant sur le support 12, la surface d'intérêt 6 peut être choisie comme passant par les centres de ces bactéries ; et donc la surface d'intérêt 6 sera définie par un décalage de 1 $\mu$m par rapport à la surface 12a du support 12 prise comme surface de référence 6'. D'autres décalages peuvent cependant être possible. Si la surface d'intérêt 6 coïncide avec la surface dans laquelle s'organisent les centres des billes, il peut donc être déterminé que la surface d'intérêt 6 formée par le plan des centres des billes se trouve sur l'axe optique 5 à une distance d'environ 17,5 $\mu$m du plan d'acquisition 2'. Avantageusement, comme dans ces exemples, la correspondance entre la position la surface de référence et la position de la surface d'intérêt 6 peut dépendre de paramètres géométriques de l'objet de référence 10. Ce n'est toutefois pas nécessaire. Par exemple, il peut être souhaité imager une surface d'intérêt 6 située à une distance donnée, non liée aux paramètres géométriques des objets de référence, par rapport aux objets de référence 10. Pour imager une surface d'intérêt 6 à 5 $\mu$m de la surface 12a du support 12, il suffit d'une translation de 5 $\mu$m par rapport aux coordonnées en z (selon l'axe optique 5) du bas des billes.

Avec un seul objet de référence 10, la seule information de position pertinente pour la mise au point qu'il est possible de déterminer est la position de l'objet de référence 10, et donc de la surface d'intérêt 6, le long de l'axe optique 5, via la coordonnée en z de l'objet de référence 10. Il s'agit toutefois de l'information la plus précieuse, puisque cette connaissance de la position de la surface d'intérêt 6 sur l'axe optique 5 permet déjà à elle seule de mettre au point le système d'imagerie pour l'acquisition d'image, c'est-à-dire de faire en sorte qu'une image de la surface d'intérêt 6 soit acquise au plan focal du système d'imagerie holographique. Il s'agit alors de prendre pour surface de référence 6' un plan de référence perpendiculaire à l'axe optique 5, et dont la coordonnée en z est celle de l'objet de référence 10 (comme par exemple son centre ou son côté).

De préférence, l'échantillon 1 comprend au moins trois objets de référence 10 dans le champ de vue du capteur d'images 2, dont les paramètres de position par rapport au plan d'acquisition 2' sont déterminées, et de préférence encore au moins cinq objets de référence 10. Disposer de paramètres de position, par rapport au plan d'acquisition 2' de plusieurs objets de référence 10 permet d'améliorer la précision de la détermination de la position de la surface d'intérêt 6 par rapport au plan d'acquisition, en utilisant une combinaison de paramètres de position tels que des coordonnées de position de plusieurs objets de référence 10, et par exemple en faisant la moyenne de leurs coordonnées en z. Disposer d'une pluralité de coordonnées de position permet, via l'exploitation des coordonnées en x et y, définies dans un plan perpendiculaire à l'axe optique 5, de déterminer également une éventuelle inclinaison de la surface de référence dans laquelle s'organisent les objets de référence 10 par rapport au plan d'acquisition 2', et donc une éventuelle inclinaison de la surface d'intérêt 6 ("tilt") correspondante. Comme évoqué précédemment, il est possible pour ce faire de déterminer des coordonnées paramétriques de la surface de référence. La pluralité de coordonnées de position permet également d'estimer la précision de la détermination de position, par exemple en déterminant des estimateurs statistiques d'éparpillement des résultats, tels qu'un écart-type.

De manière similaire et afin d'améliorer encore la précision, il est possible de travailler à partir de plusieurs images holographiques acquises par le capteur d'images 2 à différentes positions du plan d'acquisition 2'. Pour chacune des images holographiques, la position de l'au moins un objet de référence 10 par rapport au plan d'acquisition 2' de ladite image holographique est déterminée, et la détermination de la position de la surface d'intérêt 6 fait intervenir plusieurs positions de l'au moins un objet de référence 10 pour différentes positions du plan d'acquisition 2'. Il est possible également de travailler à partir de plusieurs images holographiques acquises par le capteur d'images 2 avec des longueurs d'onde différentes pour la lumière d'illumination, afin de prendre en compte différents effets optiques dépendant de la longueur d'onde de la lumière d'illumination.

Une fois déterminée la position de la surface d'intérêt 6 par rapport au plan d'acquisition 2', il peut être procédé à une mise au point de l'acquisition d'image sur la base de la position de la surface d'intérêt 6 par rapport au plan d'acquisition 2'. La mise au point consiste à faire coïncider les positions de la surface d'intérêt 6 et du plan focal objet, correspondant au plan d'acquisition 2'.

La mise au point peut comprendre le déplacement relatif de l'échantillon 1 ou du capteur d'images 2 le long de l'axe optique 5, sur une distance de déplacement dérivée de la position de la surface d'intérêt 6 par rapport au plan d'acquisition 2'. La mise au point peut consister en un déplacement de l'échantillon 1 le long de l'axe optique 5, par exemple au moyen d'un rail ou d'une platine motorisée déplaçant le support 12, pour que la position de la surface d'intérêt de l'échantillon 1 coïncide avec le plan d'acquisition 2' du capteur d'images 2. Il est également possible de modifier un organe optique du système d'imagerie déplaçant le plan d'acquisition 2' pour le faire coïncider avec la position de la surface d'intérêt. Une image subséquemment acquise permet ainsi d'imager la surface d'intérêt avec une mise au point sur cette surface d'intérêt 6. Même s'il est évident que cette image acquise suite à la mise au point peut avantageusement être une image holographique, il est à noter que cette image acquise suite à la mise au point n'est pas nécessairement une image holographique. Il est par exemple possible de n'utiliser une image holographique que pour la mise au point, puis d'acquérir une image selon d'autres modalités d'acquisition, comme par exemple avec une lumière blanche.

Une autre façon de mettre au point est d'utiliser une méthode numérique ("digital focusing"), appelée également reconstruction holographique, comprenant la transformation de l'image holographique acquise en utilisant un modèle de propagation impliquant la position de la surface d'intérêt 6 par rapport au plan d'acquisition 2'. Une convolution des données de l'image par une fonction complexe permet de déplacer a posteriori le plan focal par rapport aux objets imagés. En particulier, le modèle de propagation de Rayleigh-Sommerfeld peut être utilisé. Par exemple, le chapitre 3 de la seconde édition du livre de Joseph W. Goodman, "Introduction to Fourier optics", McGraw Hill Higher Education, 1996, décrit ce modèle. La mise au point par une méthode numérique sur une image déjà acquise permet de s'affranchir de l'utilisation d'un système mécanique de focalisation.

La **figure 5** montre le résultat d'une mise au point numérique (ou "compulsional" en anglais) appliquée à l'image de la figure 3 par une reconstruction par propagation de Rayleigh-Sommerfeld, dans laquelle le plan focal a été déplacé pour correspondre à une surface d'intérêt 6 choisie comme passant par le centre des billes (la surface de référence correspondant à la surface 12a du support 12 sur lequel reposent les billes). Si quelques artefacts (halos autour des billes) peuvent être observés, il est à noter toutefois que les billes sont clairement visibles, comme si elles avaient été directement placées au plan d'acquisition 2' lors de l'acquisition d'image.

Il résulte du procédé décrit plus haut qu'il est possible de réaliser une mise au point pour l'acquisition d'une image d'une surface d'intérêt 6 d'un échantillon 1 par un capteur d'images 2 d'un système d'imagerie de manière très précise, sans nécessiter d'équipement spécifique et sans contrainte majeures sur le système d'imagerie, outre la capacité à acquérir d'abord une image holographique. Ce procédé peut donc être appliqué à tous les systèmes d'imagerie existants aptes à acquérir une image holographique.

L'invention n'est pas limitée au mode de réalisation décrit et représenté aux figures annexées. Des modifications restent possibles, notamment du point de vue de la constitution des divers caractéristiques techniques ou par substitution d'équivalents techniques, sans sortir pour autant du domaine de protection de l'invention.

**Revendications**

1. Procédé de mise au point pour l'acquisition d'une image d'une surface d'intérêt (6) d'un échantillon (1) par un capteur d'image (2) d'un système d'imagerie, comprenant les étapes suivantes :

- mise en place de l'échantillon (1) dans lequel se trouve la surface d'intérêt (6), dans le champ de vue d'un capteur d'images (2) du système d'imagerie, l'échantillon (1) comprenant au moins un objet de référence (10) présentant une forme connue et décrit par des paramètres caractérisants associés à l'objet de référence, ces paramètres caractérisants comprenant au moins des paramètres de position de l'objet de référence (10), l'objet de référence (10) se trouvant à une position en correspondance avec une position de la surface d'intérêt (6),
- illumination de l'échantillon (1) par une lumière d'illumination et acquisition d'une image holographique par le capteur d'images (2) à un plan d'acquisition (2'), des motifs d'interférence causées par l'objet de référence (10),
- détermination de la position de l'objet de référence (10) par rapport au plan d'acquisition (2'), en utilisant un modèle de diffraction de la lumière par l'au moins un objet de référence (10), le modèle de diffraction étant fonction de la forme connue de l'objet de référence (10) et impliquant les paramètres caractérisants de l'objet de référence (10), au moins les paramètres de position de l'objet de référence (10) étant estimés par ajustement dans le modèle de diffraction de la lumière pour approximer les motifs d'interférence causés par l'objet de référence (10) apparaissant dans l'image holographique,
- détermination de la position de la surface d'intérêt (6) par rapport au plan d'acquisition (2') à partir d'une position de l'objet de référence (10) définie par les paramètres de position,
- mise au point de l'acquisition d'image sur la base de la position de la surface d'intérêt (6) par rapport au plan d'acquisition en faisant coïncider la position de la surface d'intérêt et le plan d'acquisition.

2. Procédé selon la revendication 1, dans lequel l'objet de référence (10) présentant une forme connue est un objet artificiel ajouté à l'échantillon (1), ou l'objet de référence (10) présentant une forme connue est un micro-organisme présent dans l'échantillon.

3. Procédé selon l'une quelconque des revendications précédentes, dans lequel l'objet de référence (10) présentant une forme connue a une forme sphérique, cylindrique ou ellipsoïdique.

4. Procédé selon l'une quelconque des revendications précédentes, dans lequel le modèle de diffraction de la lumière est le modèle de Mie, de Mie généralisé, de Thompson, ou de Rayleigh.

5. Procédé selon l'une quelconque des revendications précédentes, dans lequel les paramètres caractérisants associés à un objet de référence (10) comprennent également des paramètres géométriques décrivant la forme connue de l'objet de référence (10).

6. Procédé selon la revendication 5, dans lequel les paramètres géométriques de l'objet de référence (10) sont estimés par ajustement dans le modèle de diffraction de la lumière pour approximer les motifs d'interférence causés par l'objet de référence (10) dans l'image holographique.

7. Procédé selon l'une quelconque des revendications précédentes, dans lequel les paramètres caractérisants associés à l'objet de référence (10) comprennent un indice de réfraction de l'objet de référence (10) qui est estimé par ajustement dans le modèle de diffraction de la lumière pour approximer les motifs d'interférence causés par l'objet de référence (10) apparaissant dans l'image holographique.

8. Procédé selon l'une quelconque des revendications précédentes, dans lequel l'échantillon (1) est mis en place dans un milieu d'immersion (14), et le modèle de diffraction de la lumière implique un indice de réfraction dudit milieu d'immersion (14) qui est estimé par ajustement dans le modèle de diffraction de la lumière pour approximer les motifs d'interférence causés par l'objet de référence (10) apparaissant dans l'image holographique.

9. Procédé selon l'une quelconque des revendications précédentes, dans lequel l'échantillon (1) comprend au moins trois objets de référence (10) non alignés dans le champ de vue du capteur d'images (2) dont les paramètres de position par rapport au plan d'acquisition sont déterminés, et la détermination de la position de la surface d'intérêt (6) comprend une détermination d'une position d'une surface de référence dans laquelle s'organisent les objets de référence (10), la position de la surface d'intérêt (6) étant déterminée à partir de la position de la surface de référence par la correspondance entre les positions des objets de référence (10) et la position de la surface d'intérêt (6).

10. Procédé selon la revendication 9, dans lequel les paramètres de position des objets de référence (10) comprennent des coordonnées de position par rapport au plan d'acquisition (2'), et la position de la surface de référence (6') est déterminée par une interpolation des coordonnées de position suivie d'une détermination de coordonnées paramétriques de la surface de référence (6') par rapport au plan d'acquisition.

11. Procédé selon l'une quelconque des revendications précédentes, dans lequel plusieurs images holographiques sont acquises par le capteur d'images (2) à différentes positions du plan d'acquisition (2') et/ou avec des longueurs d'onde différentes pour la lumière d'illumination, et pour chacune des images holographiques, la position de l'au moins un objet de référence (10) par rapport au plan d'acquisition de ladite image holographique est déterminée, la détermination de la position de la surface d'intérêt (6) faisant intervenir plusieurs positions de l'au moins un objet de référence (10).

12. Procédé selon l'une quelconque des revendications précédentes, dans lequel la mise au point de l'acquisition d'image comprend le déplacement relatif de l'échantillon (1) et du capteur d'images (2) au moins le long de l'axe optique (5) du système d'imagerie, sur une distance de déplacement dérivée de la position de la surface d'intérêt (6) par rapport au plan d'acquisition (2').

13. Procédé selon l'une quelconque des revendications 1 à 11, dans lequel la mise au point de l'acquisition d'image comprend la modification d'un organe optique du système d'imagerie déplaçant le plan d'acquisition (2').

14. Procédé selon l'une quelconque des revendications 1 à 11, dans lequel la mise au point de l'acquisition d'image est une mise au point numérique comprenant la transformation de l'image holographique acquise en utilisant un modèle de propagation impliquant la position de la surface d'intérêt (6) par rapport au plan d'acquisition (2').

15. Système d'imagerie comprenant :

   - un capteur d'images (2) configuré pour acquérir une image holographique à un plan d'acquisition (2') dans un champ de vue,
   - une source lumineuse (4) configurée pour illuminer un échantillon (1) disposé dans le champ de vue du capteur d'images (2), l'échantillon (1) comprenant une surface d'intérêt (6) et comprenant au moins un objet de référence (10) présentant une forme connue et décrit par des paramètres caractérisants associés à l'objet de référence, ces paramètres caractérisants comprenant au moins des paramètres de position, l'objet de référence se trouvant à une position en correspondance avec la position de la surface d'intérêt,
   - un système automatisé de traitement de données configuré pour recevoir l'image holographique acquise par le capteur d'images (2) et pour déterminer la position de l'objet de référence par rapport au plan d'acquisition, en utilisant un modèle de diffraction de la lumière par l'au moins un objet de référence le modèle de diffraction étant fonction de la forme connue de l'objet de référence (10) et impliquant les paramètres caractérisants associés à l'objet de référence, au moins les paramètres de position de l'objet de référence étant estimés par ajustement dans le modèle de diffraction de la lumière pour approximer les motifs d'interférence causés par l'objet de référence dans l'image holographique, et déterminer la position de la surface d'intérêt par rapport au plan focal d'acquisition à partir d'une position de l'objet de référence définie par les paramètres de position,

le système d'imagerie holographique étant configuré pour la mise en œuvre d'un procédé de mise au point pour l'acquisition d'une image de la surface d'intérêt de l'échantillon par le capteur d'images (2) selon l'une quelconque des revendications précédentes.

**Patentansprüche**

1. Fokussierungsverfahren zur Erfassung eines Bilds einer Fläche von Interesse (6) einer Probe (1) durch einen Bildsensor (2) eines Bildgebungssystems, umfassend die folgenden Schritte:

   - Einrichten der Probe (1), in der sich die Fläche von Interesse (6) befindet, in dem Sichtfeld eines Bildsensors (2) des Bildgebungssystems, wobei die Probe (1) mindestens ein Referenzobjekt (10) umfasst, das eine bekannte Form aufweist und durch dem Referenzobjekt zugeordnete charakterisierende Parameter beschrieben wird, wobei diese charakterisierenden Parameter mindestens Positionsparameter des Referenzobjekts (10) umfassen, wobei sich das Referenzobjekt (10) an einer Position in Übereinstimmung mit einer Position der Fläche von Interesse (6) befindet,
   - Beleuchten der Probe (1) durch ein Beleuchtungslicht und Erfassen eines holografischen Bilds der durch das Referenzobjekt (10) verursachten Interferenzmuster durch den Bildsensor (2) in einer Erfassungsebene (2'),
   - Bestimmen der Position des Referenzobjekts (10) in Bezug auf die Erfassungsebene (2') unter Verwendung eines Modells für die Beugung des Lichts durch das mindestens eine Referenzobjekt (10), wobei das Beugungsmodell von der bekannten Form des Referenzobjekts (10) abhängt und charakterisierende Parameter des Referenzobjekts (10) beinhaltet, wobei mindestens die Positionsparameter des Referenzobjekts (10) durch Anpassung in dem Lichtbeugungsmodell geschätzt werden, um die durch das Referenzobjekt (10) verursachten Interferenzmuster, die in dem holografischen Bild erscheinen, zu approximieren,

- Bestimmen der Position der Fläche von Interesse (6) in Bezug auf die Erfassungsebene (2') ausgehend von einer durch die Positionsparameter definierten Position des Referenzobjekts (10),
- Fokussieren der Bilderfassung auf der Grundlage der Position der Fläche von Interesse (6) in Bezug auf die Erfassungsebene, indem die Position der Fläche von Interesse und die Erfassungsebene zur Deckung gebracht werden.

2. Verfahren nach Anspruch 1, wobei das eine bekannte Form aufweisende Referenzobjekt (10) ein zu der Probe (1) hinzugefügtes künstliches Objekt ist oder wobei das eine bekannte Form aufweisende Referenzobjekt (10) ein in der Probe vorhandener Mikroorganismus ist.

3. Verfahren nach einem der vorhergehenden Ansprüche, wobei das eine bekannte Form aufweisende Referenzobjekt (10) eine kugelige, zylindrische oder ellipsoidische Form hat.

4. Verfahren nach einem der vorhergehenden Ansprüche, wobei das Lichtbeugungsmodell das Mie-, das generalisierte Mie-, das Thompson- oder das Rayleigh-Modell ist.

5. Verfahren nach einem der vorhergehenden Ansprüche, wobei die einem Referenzobjekt (10) zugeordneten charakterisierenden Parameter auch geometrische Parameter umfassen, welche die bekannte Form des Referenzobjekts (10) beschreiben.

6. Verfahren nach Anspruch 5, wobei die geometrischen Parameter des Referenzobjekts (10) durch Anpassung in dem Lichtbeugungsmodell geschätzt werden, um die durch das Referenzobjekt (10) in dem holografischen Bild verursachten Interferenzmuster zu approximieren.

7. Verfahren nach einem der vorhergehenden Ansprüche, wobei die dem Referenzobjekt (10) zugeordneten charakterisierenden Parameter einen Brechungsindex des Referenzobjekts (10) umfassen, der durch Anpassung in dem Lichtbeugungsmodell geschätzt wird, um die durch das Referenzobjekt (10) verursachten Interferenzmuster, die in dem holografischen Bild erscheinen, zu approximieren.

8. Verfahren nach einem der vorhergehenden Ansprüche, wobei die Probe (1) in einem Immersionsmedium (14) eingerichtet wird und das Lichtbeugungsmodell einen Brechungsindex des Immersionsmediums (14) beinhaltet, der durch Anpassung in dem Lichtbeugungsmodell geschätzt wird, um die durch das Referenzobjekt (10) verursachten Interferenzmuster, die in dem holografischen Bild erscheinen, zu approximieren.

9. Verfahren nach einem der vorhergehenden Ansprüche, wobei die Probe (1) mindestens drei nicht ausgerichtete Referenzobjekte (10) in dem Sichtfeld des Bildsensors (2) umfasst, deren Positionsparameter in Bezug auf die Erfassungsebene bestimmt werden, und das Bestimmen der Position der Fläche von Interesse (6) ein Bestimmen der Position einer Referenzfläche umfasst, in der sich die Referenzobjekte (10) organisieren, wobei die Position der Fläche von Interesse (6) ausgehend von der Position der Referenzfläche durch die Übereinstimmung zwischen den Positionen der Referenzobjekte (10) und der Position der Fläche von Interesse (6) bestimmt wird.

10. Verfahren nach Anspruch 9, wobei die Positionsparameter der Referenzobjekte (10) Positionskoordinaten in Bezug auf die Erfassungsebene (2') umfassen und die Position der Referenzfläche (6') durch eine Interpolation der Positionskoordinaten gefolgt von einer Bestimmung von parametrischen Koordinaten der Referenzfläche (6') in Bezug auf die Erfassungsebene bestimmt wird.

11. Verfahren nach einem der vorhergehenden Ansprüche, wobei mehrere holografische Bilder von dem Bildsensor (2) an unterschiedlichen Positionen der Erfassungsebene (2') und/oder mit unterschiedlichen Wellenlängen für das Beleuchtungslicht erfasst werden und für jedes der holografischen Bilder die Position des mindestens einen Referenzobjekts (10) in Bezug auf die Erfassungsebene des holografischen Bilds bestimmt wird, wobei in die Bestimmung der Position der Fläche von Interesse (6) mehrere Positionen des mindestens einen Referenzobjekts (10) einfließen.

12. Verfahren nach einem der vorhergehenden Ansprüche, wobei die Fokussierung der Bilderfassung die relative Verlagerung der Probe (1) und des Bildsensors (2) mindestens entlang der optischen Achse (5) des Bildgebungssystems über einen aus der Position der Fläche von Interesse (6) in Bezug auf die Erfassungsebene (2') abgeleiteten Verlagerungsabstand umfasst.

13. Verfahren nach einem der Ansprüche 1 bis 11, wobei die Fokussierung der Bilderfassung die Änderung eines optischen Elements des Bildgebungssystems umfasst, das die Erfassungsebene (2') verlagert.

14. Verfahren nach einem der Ansprüche 1 bis 11, wobei die Fokussierung der Bilderfassung eine digitale Fokussierung ist, welche die Transformation des erfassten holografischen Bilds unter Verwendung eines Ausbreitungsmodells umfasst, das die Position der Fläche von Interesse (6) in Bezug auf die Erfassungsebene (2') beinhaltet.

15. Bildgebungssystem, umfassend:

- einen Bildsensor (2), der dazu ausgestaltet ist, ein holografisches Bild an einer Erfassungsebene (2') in einem Sichtfeld zu erfassen,
- eine Lichtquelle (4), die dazu ausgestaltet ist, eine in dem Sichtfeld eines Bildsensors (2) angeordnete Probe (1) zu beleuchten, wobei die Probe (1) eine Fläche von Interesse (6) umfasst und mindestens ein Referenzobjekt (10) umfasst, das eine bekannte Form aufweist und durch dem Referenzobjekt zugeordnete charakterisierende Parameter beschrieben wird, wobei diese charakterisierenden Parameter mindestens Positionsparameter umfassen, wobei sich das Referenzobjekt an einer Position in Übereinstimmung mit der Position der Fläche von Interesse befindet,
- ein automatisiertes Datenverarbeitungssystem, das dazu ausgestaltet ist, das von dem Bildsensor (2) erfasste holografische Bild zu empfangen und die Position des Referenzobjekts in Bezug auf die Erfassungsebene zu bestimmen unter Verwendung eines Modells für die Beugung des Lichts durch das mindestens eine Referenzobjekt, wobei das Beugungsmodell von der bekannten Form des Referenzobjekts (10) abhängig ist und die dem Referenzobjekt zugeordneten charakterisierenden Parameter beinhaltet, wobei mindestens die Positionsparameter des Referenzobjekts durch Anpassung in dem Lichtbeugungsmodell geschätzt werden, um die durch das Referenzobjekt in dem holografischen Bild verursachten Interferenzmuster zu approximieren und die Position der Fläche von Interesse in Bezug auf die Erfassungsbrennebene ausgehend von einer durch die Positionsparameter definierten Position des Referenzobjekts zu bestimmen,

wobei das holografische Bildgebungssystem zur Implementierung eines Fokussierungsverfahrens zur Erfassung eines Bilds der Fläche von Interesse der Probe durch den Bildsensor (2) nach einem der vorhergehenden Ansprüche ausgestaltet ist.

**Claims**

1. A focus adjustment method for acquiring an image of a surface of interest (6) from a sample (1) by an image sensor (2) from an imaging system, comprising the following steps of:

- placing the sample (1) in which the surface of interest (6) is, in the field-of-view of an image sensor (2) of the imaging system, the sample (1) comprising at least one reference object (10) having a known shape and described by characterising parameters associated with the reference object, these characterising parameters comprising at least position parameters of the reference object (10), the reference object (10) being at a position in correspondence with a position of the surface of interest (6),
- illuminating the sample (1) by an illumination light and acquiring a holographic image by the image sensor (2) at an acquisition plane (2'), of the interference patterns caused by the reference object (10),
- determining the position of the reference object (10) with respect to the acquisition plane (2'), using a light diffraction model by the at least one reference object (10), the diffraction model being based on the known shape of the reference object (10) and involving the characterising parameters of the reference object (10), at least the position parameters of the reference object (10) being estimated by adjustment in the light diffraction model to approximate the interference patterns caused by the reference object (10) appearing in the holographic image,
- determining the position of the surface of interest (6) with respect to the acquisition plane (2') from a position of the reference object (10) defined by the position parameters,
- performing focus adjustment of the image acquisition based on the position of the surface of interest (6) with respect to the acquisition plane.

2. The method according to claim 1, wherein the reference object (10) is an artificial object added to the sample (1), or the reference object (10) is a microorganism present in the sample.

3. The method according to any of the preceding claims, wherein the reference object (10) has a spherical, cylindrical, or ellipsoidal shape.

4. The method according to any of the preceding claims, wherein the light diffraction model is the Mie, generalised Mie, Thompson, or Rayleigh model.

5. The method according to any of the preceding claims, wherein the characterising parameters associated with a reference object (10) also comprise geometric parameters describing the known shape of the reference object (10).

6. The method according to claim 5, wherein the geometric parameters of the reference object (10) are estimated by adjustment in the light diffraction model to approximate the interference patterns caused by the reference object (10) in the holographic image.

7. The method according to any of the preceding claims, wherein the characterising parameters associated with the reference object (10) comprise a refractive index of the reference object (10) which is estimated by adjustment in the light diffraction model to approximate the interference patterns caused by the reference object (10) appearing in the holographic image.

8. The method according to any of the preceding claims, wherein the sample (1) is placed in an immersion medium (14), and the light diffraction model involves a refractive index of said immersion medium (14) which is estimated by adjustment in the light diffraction model to approximate the interference patterns caused by the reference object (10) appearing in the holographic image.

9. The method according to any of the preceding claims, wherein the sample (1) comprises at least three reference objects (10) not aligned in the field-of-view of the image sensor (2) whose position parameters with respect to the acquisition plane are determined, and determining the position of the surface of interest (6) comprises determining a position of a reference surface in which the reference objects are arranged (10), the position of the surface of interest (6) being determined from the position of the reference surface by the correspondence between the positions of the reference objects (10) and the position of the surface of interest (6).

10. The method according to claim 9, wherein the position parameters of the reference objects (10) comprise position coordinates with respect to the acquisition plane (2'), and the position of the reference surface (6') is determined by interpolation of the position coordinates followed by a determination of parametric coordinates of the reference surface (6') with respect to the acquisition plane.

11. The method according to any of the preceding claims, wherein several holographic images are acquired by the image sensor (2) at different positions of the acquisition plane (2') and/or with different wavelengths for the illumination light, and for each of the holographic images, the position of the at least one reference object (10) with respect to the acquisition plane of said holographic image is determined, the determination of the position of the surface of interest (6) involving several positions of the at least one object (10).

12. The method according to any of the preceding claims, wherein the focus adjustment of the image acquisition comprises the relative displacement of the sample (1) and the image sensor (2) at least along the optical axis (5) of the imaging system, over a displacement distance derived from the position of the surface of interest (6) with respect to the acquisition plane (2').

13. The method according to any of claims 1 to 11, wherein the focus adjustment of the image acquisition comprises modifying an optical member of the imaging system displacing the acquisition plane (2').

14. The method according to any of claims 1 to 11, wherein the focus adjustment of the image acquisition is a digital focus adjustment comprising transforming the holographic image acquired using a propagation model involving the position of the surface of interest (6) with respect to the acquisition plane (2').

15. An imaging system comprising:

- an image sensor (2) configured to acquire a holographic image at an acquisition plane (2') in a field-of-view,
- a light source (4) configured to illuminate a sample (1) disposed in the field-of-view of the image sensor (2), the sample (1) comprising a surface of interest (6) and comprising at least one reference object (10) having a known shape and described by characterising parameters associated with the reference object, these characterising parameters comprising at least position parameters, the reference object being at a position in correspondence with the position of the surface of interest,
- an automated data processing system configured to receive the holographic image acquired by the image sensor (2) and to determine the position of the reference object with respect to the acquisition plane, using a light diffraction model by the at least one reference object, the diffraction model being a function of the known shape of the reference object (10) and involving the characterising parameters associated with the reference object, at least the position parameters of the reference object being estimated by adjustment in the light diffraction model to approximate the interference patterns caused by the reference object in the holographic image, and to determine the position of the surface of interest with respect to the acquisition focal plane from a position of the reference object defined by the position parameters, the holographic imaging system being configured for the implementation of a focus adjustment method for acquiring an image of the surface of interest of the sample by the image sensor (2) according to any of the preceding claims.

# FIG 1

# FIG 2

**FIG 3**

**FIG 4**

Coordonnées en y (x 10⁻⁵ m)   Coordonnées en x (x 10⁻⁵ m)

**FIG 5**

## RÉFÉRENCES CITÉES DANS LA DESCRIPTION

**Documents brevets cités dans la description**

- EP 3339835 A

**Littérature non-brevet citée dans la description**

- **LIEBLING, M** ; **UNSER, M**. Autofocus for digital Fresnel holograms by use of a Fresnelet-sparsity criterion. *JOSA A*, 2004, vol. 21, 2424-2430
- **DUBOIS, F** ; **SCHOCKAERT, C** ; **CALLENS, N** ; **YOURASSOWSKY, C**. Focus plane detection criteria in digital holography microscopy by amplitude analysis. *Opt. Express*, 2006, vol. 14, 5895-5908
- **TRUJILLO, C. A.** ; **GARCIA-SUCERQUIA, J.** Automatic method for focusing biological specimens in digital lensless holographic microscopy. *Opt. Lett*, 2014, vol. 39, 2569-2572
- **BON, P. et al.** Three-dimensional nanometre localization of nanoparticles to enhance super-resolution microscopy. *Nat. Commun.*, 2015, vol. 6, 7764
- **JOSEPH W. GOODMAN**. Introduction to Fourier optics. McGraw Hill Higher Education, 1996